Europäisches Patentamt

European Patent Office

Office européen des brevets

(11) Veröffentlichungsnummer: **0 370 420**
**A1**

## (12) EUROPÄISCHE PATENTANMELDUNG

(21) Anmeldenummer: **89121398.5**

(22) Anmeldetag: **18.11.89**

(51) Int. Cl.5: **F16H 55/18**

(30) Priorität: **25.11.88 DE 3839807**

(43) Veröffentlichungstag der Anmeldung:
**30.05.90 Patentblatt 90/22**

(84) Benannte Vertragsstaaten:
**DE ES FR GB IT**

(71) Anmelder: **AUDI AG**
**Auto-Union-Strasse 1 Postfach 220**
**D-8070 Ingolstadt(DE)**

(72) Erfinder: **Barnreiter, Karl**
**Frühlingstrasse 13**
**D-8078 Hitzhofen(DE)**
Erfinder: **Lang, Dieter**
**Kraibergstrasse 30**
**D-8070 Ingolstadt(DE)**

(74) Vertreter: **Le Vrang, Klaus**
**AUDI AG Postfach 220 Patentabteilung I/EQP**
**D-8070 Ingolstadt(DE)**

(54) **Einrichtung zum Vermeiden des Eingriffspiels zwischen Zahnrädern.**

(57) Bei einer Einrichtung zum Aufheben des Eingriffspieles an einem Zahnrad, welches mit einem Gegenzahnrad kämmt, mit einer dem Zahnrad benachbarten Zahnscheibe (24), die ebenfalls mit dem Gegenzahnrad kämmt und relativ zum Zahnrad gegen die Kraft zumindest einer Feder (30) verdrehbar ist, wobei die Feder in einer Ausnehmung des Zahnrades (24) und der Zahnscheibe (28) abgestützt ist, sind in baulich und funktionell vorteilhafter Weise die Ausnehmungen im wesentlichen parallel zur Drehachse des Zahnrades ausgerichtet und in die Ausnehmungen eine U-förmige Schenkelfeder (30) einsetzbar.

FIG.2

EP 0 370 420 A1

## Einrichtung zum Vermeiden des Eingriffspiels zwischen Zahnrädern

Die Erfindung betrifft eine Einrichtung zum Vermeiden des Eingriffspiels an einem Zahnrad, welches mit einem Gegenzahnrad kämmt, gemäß dem Oberbegriff des Patentanspruches 1.

Eine derartige Einrichtung zeigt beispielsweise die DE-OS 28 13 456. Dabei ist an dem Zahnrad und an der Zahnscheibe je ein zur Drehachse paralleler Stift vorgesehen, welche Stifte durch eine Feder in Drehrichtung gegeneinander verspannt sind. Dabei muß zwangsläufig der eine Stift durch eine Ausnehmung im benachbarten Zahnrad hindurchgeführt werden. Die gezeigte Vorrichtung ist hinsichtlich der Bauteile, der räumlichen Anordnung und insbesondere aufgrund der komplizierten Montage ungünstig.

Aufgabe der Erfindung ist es, eine Einrichtung der gattungsgemäßen Art derart auszubilden, daß sie bei zuverlässiger Funktion hinsichtlich der Fertigung und der Montage besonders einfach ist.

Diese Aufgabe wird erfindungsgemäß mit den kennzeichnenden Merkmalen des Patentanspruches 1 gelöst. Vorteilhafte und zweckmäßige Weiterbildungen der Erfindung sind den Patentansprüchen 2 bis 7 entnehmbar.

Erfindungsgemäß wird somit vorgeschlagen, im Zahnrad und in der benachbarten Zahnscheibe je eine zur Drehrichtung des Zahnrades achsparallele Ausnehmung vorzusehen, durch die hindurch eine U-förmige Schenkelfeder einsteckbar ist. Dabei stützt sich der eine Schenkel an dem Zahnrad und der andere Schenkel an der Zahnscheibe ab, wodurch ein beachtliches Verdrehmoment erzeugbar ist. Die Ausnehmung kann vorzugsweise eine einfache Bohrung sein, in die in montageeinfacher Weise die Schenkelfeder eingesteckt wird.

Bevorzugt kann entsprechend den Merkmalen des Patentanspruches 2 die Schenkelfeder zugleich als axiale Sicherung für die Zahnscheibe ausgebildet sein. Die Zahnscheibe wird somit durch die Schenkelfeder am Zahnrad gehalten, so daß die dadurch gebildete Montageeinheit beispielsweise bei Kraftfahrzeug-Wechselgetrieben schnell und unkompliziert montierbar ist.

Die Schenkelfeder und die Ausnehmungen im Zahnrad bzw. in der Zahnscheibe können entsprechend den Merkmalen des Patentanspruches 3 gestaltet sein, wodurch eine zuverlässige Axialsicherung mit geringem herstellungstechnischen Mehraufwand erzielbar ist.

Ferner kann gemäß den Merkmalen der Patentansprüche 4 und 5 zusätzlich zu der Schenkelfeder ein Sicherungsstift mit vorgesehen sein, der einerseits die Axialsicherung zwischen Zahnrad und Zahnscheibe sicherstellt und andererseits die Schenkelfeder nach deren Montage hält. Diese Anordnung hat den Vorteil, daß die Ausnehmungen simple Bohrungen sein können, die spanlos oder spanabhebend im Zahnrad bzw. in der Zahnscheibe ausgebildet sind. Der Sicherungsstift wiederum kann ein Sinterteil, ein Feingußteil oder ggf. ein Kunststoffteil sein, an das die für die Axialsicherung und für die Halterung der Schenkelfeder erforderlichen Nasen und Anschläge angeformt sind. Durch die Merkmale des Patentanspruches 6 wird in einfacher Weise ein sicherer Formschluß der Schenkelfeder und ggf. des Sicherungsstiftes in der Ausnehmung hergestellt. Ein Herausrutschen ist damit zuverlässig vermieden.

Bevorzugt sind gemäß Patentanspruch 7 in dem Zahnrad und in der Zahnscheibe mehrere Ausnehmungen mit Schenkelfedern und ggf. Sicherungsstiften vorgesehen, die winkelversetzt zueinander angeordnet sind. Daraus resultiert ein höheres Verdrehmoment zwischen Zahnrad und Zahnscheibe, ferner ist eine zuverlässige, gleichmäßige Anlage der Zahnscheibe am Zahnrad sichergestellt.

Zwei Ausführungsbeispiele der Erfindung sind im folgenden mit weiteren Einzelheiten näher erläutert. Die schematische Zeichnung zeigt in

Fig. 1 eine Einrichtung zum Vermindern von Zahngeräuschen an einem Stirnradtrieb mit schräg verzahnten Zahnrädern, wobei das Zahnrad mit benachbarter Zahnscheibe teilweise entlang seiner Drehachse geschnitten ist;

Fig. 2 einen Schnitt gemäß Linie II-II der Fig. 1;

Fig. 3 eine Einrichtung ähnlich Fig. 1, jedoch zusätzlich mit einem Sicherungsstift, dargestellt im wesentlichen in der gleichen Schnittebene wie Fig. 2 und

Fig. 4 eine Ansicht X der Fig. 3, wobei die Schnittebene der Fig. 3 mit III-III exakt definiert ist.

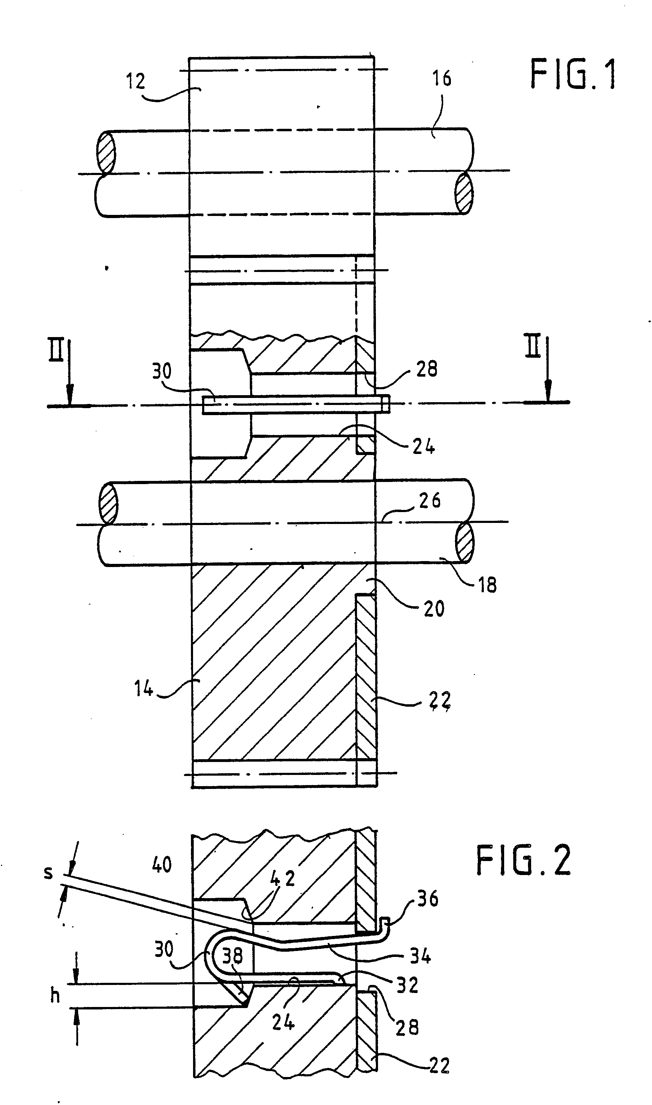

Die Fig. 1 zeigt einen Stirnradtrieb mit zwei schräg verzahnten Zahnrädern 12, 14, die miteinander kämmend in Eingriff sind. Die Zahnräder mit den sie tragenden Wellen 16, 18 können Teil eines Kraftfahrzeug-Wechselgetriebes sein.

Das Zahnrad 14 weist einen ringförmigen Bund 20 auf, auf dem eine Zahnscheibe 22 verdrehbar gelagert ist. Die Zahnscheibe 22 weist die gleiche Verzahnung wie das Zahnrad 14 auf und ist mit dem Zahnrad 12 ebenfalls in ständigem Eingriff.

Das Zahnrad 14 ist in seinem Nabenbereich mit drei jeweils über 120° seines Umfanges versetzt zueinander liegenden Ausnehmungen bzw. Bohrungen 24 gleicher Geometrie versehen (in der Zeichnung ist nur eine Bohrung dargestellt), die parallel zur Drehachse 26 des Zahnrades 14 ausgerichtet sind. Desgleichen sind in der Zahnscheibe 22 korrespondierende Ausnehmungen 28 eingearbeitet. Die Ausnehmungen 28 sind dabei zu den Bohrungen 24 so positioniert, daß bei betriebsmäßig in Eingriff befindlicher Verzahnung diese in Vorspannrichtung versetzt zu den Bohrungen 24 liegen (vgl. Fig. 2).

In die Bohrung 24 bzw. die Ausnehmungen 28 ist jeweils eine U-förmige Schenkelfeder 30 eingesetzt, die aus Federbandstahl hergestellt ist. Die Schenkelfeder 30 stützt sich mit ihrem einen Schenkel 32 an der Bohrung 24 ab, während der andere Schenkel 34 mit einer definierten Vorspannkraft auf die Zahnscheibe 22 ein Verdrehmoment ausübt.

Zur Axialsicherung der Zahnscheibe 22 auf dem Zahnrad 14 ist ein um ca. 90° abgebogener Abschnitt 36 am Schenkel 34 der Schenkelfeder 30 vorgesehen, der die Zahnscheibe 22 wie dargestellt umgreift. Ferner ist an der Schenkelfeder 30 eine von dem Schenkel 32 abragende Zunge 38 angeformt, die sich an einer durch die Bohrung 24 und eine im Durchmesser größeren Bohrung 40 im Zahnrad 14 ergebende Ringschulter 42 als Anschlagsfläche abstützt. Die Höhe h der von dem Schenkel 32 in einem Winkel von ca. 45° abragenden Zunge 38 ist größer als der Spalt s, der den federnd nachgiebigen Freigang der Schenkelfeder 30 in der Ausnehmung 24 definiert. Dadurch ist die Feder 30 formschlüssig zuverlässig in der Ausnehmung 24 gehalten. Um Montagefehler zu vermeiden, kann in der Zahnscheibe 22 und dem Zahnrad 14 eine Justierungsbohrung vorgesehen sein, in die während der Montage ein Paßstift eingesteckt wird. Dadurch ist sichergestellt, daß Zahnrad 14 und Zahnscheibe 22 in der konstruktiv vorgegebenen Zuordnung zueinander montiert werden.

Bei der Montage wird die Zahnscheibe 22 auf den Ringbund 20 des Zahnrades 14 aufgeschoben und ggf. der angesprochene Paßstift eingesteckt. Dann werden die Schenkelfedern 30 in die Ausnehmungen 28 bzw. 24 eingeschoben, bis die Zunge 38 einer jeden Schenkelfeder 30 an der Ringschulter 42 einrastet. Danach bilden Zahnrad 14 und Zahnscheibe 22 eine Montageeinheit.

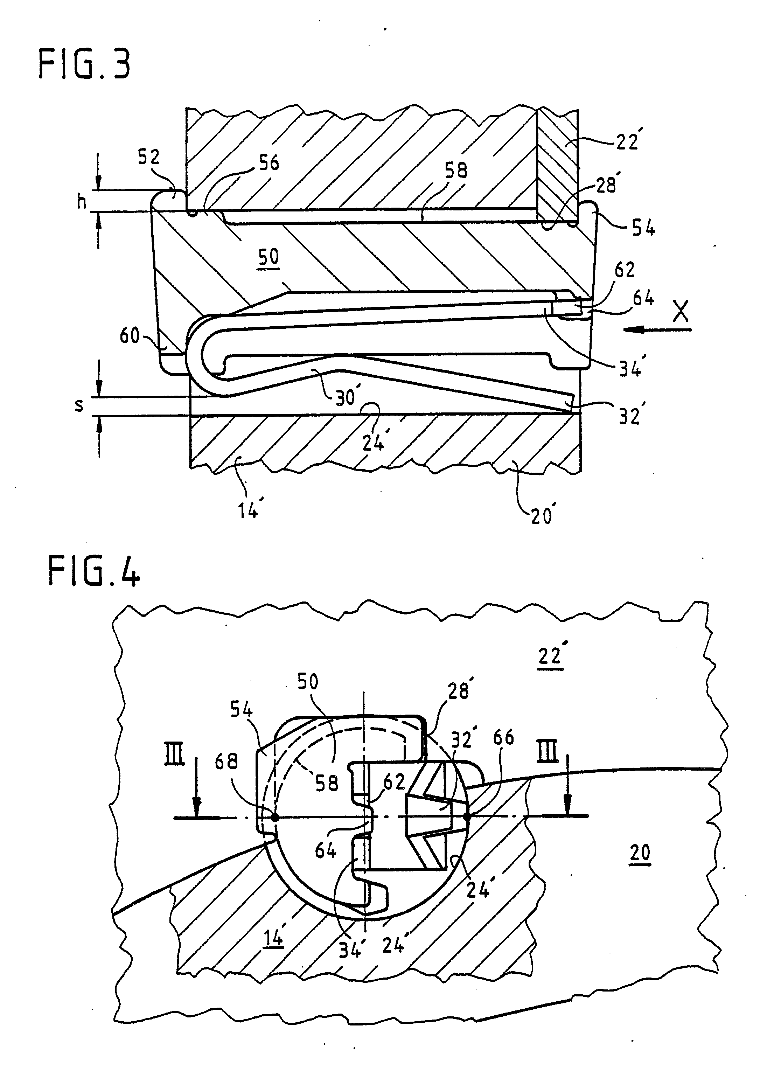

Die Fig. 3 und 4 zeigen eine im wesentlichen gleiche Einrichtung; gleiche Teile sind mit gleichen Bezugszeichen versehen. In der Ausnehmung bzw. Bohrung 24' des Zahnrades 14' ist ein Sicherungsstift 50 im wesentlichen halbkreisförmigen Querschnittes eingesetzt, der mit Nasen 52, 54 die jeweils freien Stirnseiten der Zahnscheibe 22' bzw. des Zahnrades 14' umgreift. Der Sicherungsstift 50 weist eine nockenartige Erhebung 56 auf, mit der er in der Bohrung 24' abgestützt ist. Eine von der Bohrung 24' zurückgesetzte Fläche 58 greift an der Ausnehmung 28' an (vgl. auch Fig. 4).

Die U-förmige Schenkelfeder 30' stützt sich mit ihrem einen Schenkel 32' an der in den Ringbund 20 des Zahnrades 14' einschneidenden Bohrung 24' ab, während der andere Schenkel 34' an dem Sicherungsstift 50 im Bereich der Ausnehmung 28' der Zahnscheibe angreift. Zur Axialsicherung der Schenkelfeder 30' ist diese an ihrem Basisbereich an einer Nase 60 des Sicherungsstiftes 50 abgestützt. Andernends umgreift eine an dem freien Stirnende des Schenkels 34' vorgesehene schlitzförmige Ausnehmung 62 eine relativ schmale Nase 64 am Sicherungsstift 50.

Wie der Fig. 4 der Zeichnung entnehmbar ist, liegt der Schenkel 32' der U-förmigen Schenkelfeder 30' mit einem Angriffspunkt 66 an der Bohrung 24' an, während der gegenüberliegende Schenkel 34' über den Sicherungsstift 50 mit einem Angriffspunkt 68 auf die Zahnscheibe 22' wirkt.

Bei der Montage der beschriebenen Einrichtung wird zunächst die Zahnscheibe 22' auf das Zahnrad 14' aufgelegt, wobei diese auf dem Ringbund 20 verdrehbar gelagert ist. Bei sich überdeckenden Ausnehmungen 28', 24' wird zunächst der Sicherungsstift 50 in die Ausnehmungen eingeschoben, bis dessen Nasen 52, 54 wie auf der Zeichnung in Fig. 3 dargestellt die freien Stirnseiten des Zahnrades 14' und der Zahnscheibe 28' übergreifen. Dann wird die Schenkelfeder 30' in den noch freien Raum der Ausnehmungen 28', 24' eingeschoben, bis die Ausnehmung 62 in dem Schenkel 34' der Schenkelfeder 30' die Nase 64 des Sicherungsstiftes 50 hintergreift. In dieser Stellung ist die Schenkelfeder 30' axial gegen Herausfallen gesichert. Zugleich wird nunmehr durch die Schenkelfeder 30' der Sicherungsstift 50 gegen Herausfallen gesichert, weil die federnde Nachgiebigkeit s der Schenkelfeder 30' innerhalb deren Einbauraumes geringer ist als die Höhe h der das Zahnrad 14' und die Zahnscheibe 22' umgreifenden Nasen 52, 54. Im übrigen ist die Funktion der Einrichtung gemäß den Fig. 3 und 4 konform der in den Fig. 1 und 2 beschriebenen Ausführung.

## Ansprüche

1. Einrichtung zum Aufheben des Eingriffspiels an einem Zahnrad, welches mit einem Gegenzahnrad kämmt, mit einer dem Zahnrad benachbarten Zahnscheibe, die ebenfalls mit dem Gegenzahnrad kämmt und relativ zum Zahnrad gegen die Kraft zumindest einer Feder verdrehbar ist, wobei die Feder in einer Ausnehmung des Zahnrades und der Zahnscheibe abgestützt ist, dadurch gekennzeichnet, daß die Ausnehmungen (24, 28) im wesentlichen parallel zur Drehachse (26) des Zahnrades (14) ausgerichtet und in die Ausnehmungen eine U-förmige Schenkelfeder (30) einsetzbar ist.

2. Einrichtung nach Anspruch 1, dadurch gekennzeichnet, daß die Schenkelfeder (30) axial unverschiebbar in der Ausnehmung (24) des Zahnrades (14) gehalten ist und mittel- oder unmittelbar die Zahnscheibe (22) am Zahnrad (14) hält.

3. Einrichtung nach den Ansprüchen 1 und 2, dadurch gekennzeichnet, daß die Ausnehmung (24) auf der der Zahnscheibe (22) gegenüberliegenden Seite des Zahnrades (14) eine Anschlagfläche (42) aufweist, an der eine von der Schenkelfeder (30) abragende Zunge (38) abgestützt ist und daß der auf die Zahnscheibe (22) wirkende Schenkel (34) der Schenkelfeder (30) mit einem ca. 90° abgebogenen Abschnitt (36) die Zahnscheibe (22) umfaßt.

4. Einrichtung nach den Ansprüchen 1 und 2, dadurch gekennzeichnet, daß die Schenkelfeder (30') sich einerseits an einem in die Ausnehmungen (24', 28') des Zahnrades (14') und der Zahnscheibe (22') eingesetzten Sicherungsstiftes (50) abstützt, wobei der Sicherungsstift (50) die freien Stirnseiten des Zahnrades (14') und der Zahnscheibe (22') mit angeformten Nasen (52, 54) umgreift.

5. Einrichtung nach Anspruch 4, dadurch gekennzeichnet, daß die Schenkelfeder (30') an dem Sicherungsstift (50) axial unverschiebbar gehalten ist (Nasen 60, 64).

6. Einrichtung nach einem oder mehreren der Ansprüche 2 bis 5, dadurch gekennzeichnet, daß die federnde Nachgiebigkeit der Schenkelfeder (30; 30') innerhalb der Ausnehmung (Spalt s) geringer ist als die wirksame Höhe (h) der als Sicherung gegen Herausrutschen wirkenden Zunge (38) bzw. Nasen (52, 54) des Sicherungsstiftes (50).

7. Einrichtung nach einem oder mehreren der vorhergehenden Ansprüche, dadurch gekennzeichnet, daß zumindest zwei, vorzugsweise drei Ausnehmungen (24, 28) mit Schenkelfedern (30) vorgesehen sind, die umfangsmäßig versetzt zueinander liegen.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 311 902 (ROETHEL)<br>* Ganzes Dokument * | 1,2,7 | F 16 H 55/18 |
| A | | 3 | |
| | --- | | |
| A | JP-Y-4 834 438 (TOKYO ELECTRONIC)<br>* Figuren 3,4 * | 1 | |
| | --- | | |
| A | US-A-3 127 784 (O'NEILL)<br>* Ganzes Dokument * | 1 | |
| | ----- | | |

**RECHERCHIERTE SACHGEBIETE (Int. Cl.5)**

F 16 H

Der vorliegende Recherchenbericht wurde für alle Patentansprüche erstellt

| Recherchenort | Abschlußdatum der Recherche | Prüfer |
|---|---|---|
| DEN HAAG | 06-03-1990 | MENDE H. |